# EUROPEAN PATENT SPECIFICATION

(11) **EP 0 458 001 B1**
(45) Date of publication and mention of the grant of the patent: **26.04.1995**
(21) Application number: 90830617.8
(22) Date of filing: 28.12.1990
(51) Int. Cl.: B27C 1/08, B27C 1/12, B27C 5/06

(54) **Improvement in moulding machines for woodworking**
Verbesserung an Kehlenmaschinen für die Holzbearbeitung
Perfectionnement aux moulurières pour le travail du bois

(30) Priority: 24.05.1990 IT 351990
(43) Date of publication of application: 27.11.1991
(73) Proprietor: SCM S.p.A., I-47037 Rimini (Forlî) (IT)
(72) Inventor: Gemmani, Giuseppe, I-47037 Rimini (Forli) (IT)
(74) Representative: Lanzoni, Luciano

(56) References cited:
- EP-A- 0 124 802
- DE-A- 3 933 102
- DE-C- 885 610
- US-A- 2 200 628
- US-A- 2 780 254
- US-A- 4 457 350

## Description

The present invention relates to an improvement in moulding machines for woodworking.

Manufactures of woodworking machines, and through feed moulders in particular, are known to research continually into the possibilities of enhancing the quality of the machining produced by such equipment and reducing dead time to the minimum obtainable.

Some solutions are known which refer to planning machines, such as thickness planners, in which is desirable yieldingly to hold the stock down against the bed or table as it is fed through the machine. An example is the pubblication US-A-2,780,254 in which the cutter head is provided by a cutter tool which is bilaterally supported by the front and rear walls of the cutter head which is vertically slidable along vertically disposed posts; to hold the stock against the bed are also provided front and rear rollers which are pivotally mounted on the side walls of the head and are vertically movable with the tool and the cutter head: this does not permit an easy regulation of the hold rollers in the event of the diameter tool changing.

In the case of through feed moulders, which are designed to machine one or more of the four faces of quadrangular section stock supplied from an infeed line, it has been found that the operations of changing over to different toolage (or size of stock) can be notably lengthy and laborious; the tools utilized, which number at least one for each face of the work but can be more, depending on the type of machining to be executed, are arranged in line along a horizontal bed.

The work is fed by wheels (rubber faced, or steel) positoned between the tools and rotating about shafts parallel with the bed, which are supported by and driven together from a back rail in such a way that pieces are directed continuously along the feed path and into engagement with the tools.

The four tool heads, designated each to a relative face of the work (taken along the feed direction, right side, left side, top and bottom respectively) are accommodated internally of protective and dust extraction casings and provided with two elements, disposed one on either side and located externally of the casing, by which the work is held down going into, through and beyond the cutting stroke; more exactly, the first hold-down element encountered is angled in order to direct the work onto the tool, whereas the second is positioned parallel to the bed and distanced therefrom at a height that will depend on the prescribed thickness of the machined work.

To reiterate, the operation of replacing any one of the tools is lengthy and laborious. In effect, the operator initially must detach the two hold-down elements, separating them from the supporting back rail, before the single tool can be removed; the replacement tool must then be aligned with the bed (according to the new diameter), using handwheels and graduated scales afforded by the machine, by means of which the operator can check and adjust the distance (height) of the axis of rotation of the tool from the bed. This accomplished, the two hold-down elements must be repositioned to suit the diameter of the new tool (the plane occupied by the hold-down elements coincides with the cutting edge at the smallest diameter of the tool), and its distance from the bed (equivalent to the thickness of the work).

It will be clear enough from this brief outline that the change procedure for each tool requires a considerable length of time for the operator to accomplish; what is more, the precision with which the replacement tool and the hold-down elements are repositioned is dependent in most instances on the skill and experience of the operator.

A further drawback affecting through feed moulders is occasioned by the considerable distance between centres of the feed wheel positioned immediately preceding the horizontal tools, and the first wheel encountered thereafter. This clearly represents a source of difficulty when the work to be machined is of length less than the distance in question, as the workpiece will tend to stand still (for want of driving contact) as soon as it is past the first of the two horizontal tools, remaining unable to reach the wheel next after the second horizontal tool until jogged forward by a further workpiece.

This is a defect attributable to the conventional architecture of current machines, in which the distance between centres of the horizontal tools is extremely limited and disallows the interposition even of a single feed wheel, due to the presence of the second hold-down element and to the fact that this is connected directly to the back rail.

Accordingly, the object of the present invention is to overcome the drawbacks in question by reordering a moulding machine in such a way as to optimize tool change operations, and at the same time to ensure uninterrupted progress of the work along the entire length of the feed path.

The stated object is realized in an improvement as characterized in the appended claims, whereby the hood covering one of the horizontal moulding tools serves also to support the two relative hold-down guides, one connected rigidly on either side, and means are incorporated, operating between the hood and the slide, by which to adjust the distance of the hood from the horizontal bed in keeping with a reference diameter assigned to the tool; also, the second of the two hold-down guides encountered by the work affords a recess in which to accommodate a feed wheel mounted to the back rail of the machine.

The invention will now be described in detail, by way of example, with the aid of the accompanying drawings, in which:
- fig 1 is a front elevation showing the arrangement of the tools and the feed wheels in a through feed moulder according to the invention, from which certain parts are omitted better to reveal others;
- fig 2 is a front elevation of one of the cutting tools in the moulder of fig 1, from which certain parts are omitted better to reveal others;
- fig 3 shows the tool of fig 2 in plan from above, with certain parts omitted better to reveal others.

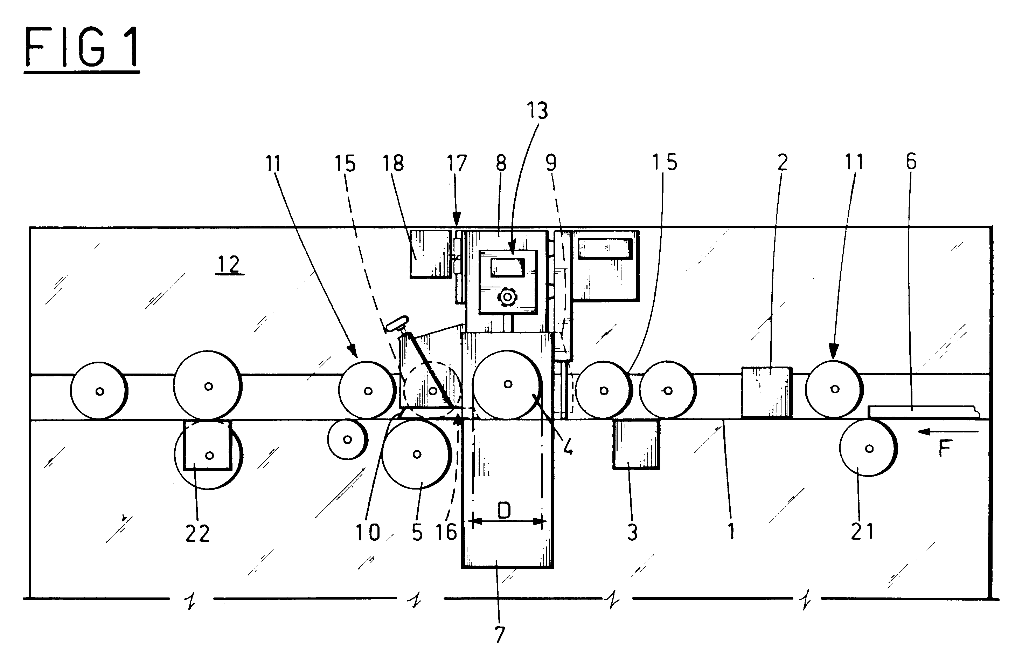

With reference to the drawings, the improvement in moulding machines for woodworking according to the invention relates to through feed moulders of the type comprising a set of spindle heads installed in-line along a horizontal bed 1 and affording a plurality of tools 2, 3, 4 and 5 (see fig 1) by which the four faces of a workpiece 6 are machined.

Considered in relation to the path F followed by the work 6, the four tools are designated right hand vertical, left hand vertical, top horizontal and bottom horizontal respectively, indicating the face of the work 6 machined by the individual tool.

Also illustrated in fig 1 are two further tools installed respectively at the start and finish of the moulding cycle, which may contribute to the machining operation according to the format of the work 6; in the case in point, these are a planer 21 (located at the entry end, in relation to the feed direction F) and a universal cutter 22 installed at the exit end and serving to shape angled surfaces.

Each tool 2, 3, 4 and 5 is mounted to a respective slide 7 of which the position in relation to the machine will depend on the individual type of tool; these slides 7 (one only is illustrated in fig 1) serve to vary the operating clearance of the tool in relation to a given datum 1 or work face, which happens to coincide with the horizontal bed in the case of the tool shown in fig 1 by way of example.

Also associated with each of the four tools 2, 3, 4 and 5, positioned preceding and following in close proximity to each side of the relative tool hood 8, are hold-down elements 9 and 10 consisting in a pair of guides of which the first 9 encountered by the work 6 is angled in relation to the bed 1 and the second 10 disposed parallel thereto, in such a way as to direct and steady the work, respectively, during the cutting stroke.

Fig 1 also illustrates roller means 11 consisting in a plurality of steel or rubber faced wheels 15 occupying the entire length of the horizontal bed 1 and mounted to a back rail 12 which flanks the bed at the rear, as viewed in the drawings; these same wheels 15 provide the means by which the work 6 is fed from one tool to the next, and are rotatable about respective axes disposed transversely to the longitudinal axis of the horizontal bed 1.

The improvement disclosed consists principally in providing each tool 2, 3, 4 and 5 with a relative hood 8 and associating the two hold-down guides 9 and 10 rigidly with the hood, one on either side, by means of relative screw fasteners 24 and 25.

The hood 8 is equipped further with adjustment means denoted 13, operating between the hood itself and the slide 7, by which the position of the hood can be varied in relation to the horizontal bed 1 commensurately with a reference diameter D assigned to the tool; this diameter will be determined at each change using the nominal diameter of the tool More in detail, the adjustment means 13 operating between the hood 8 and the slide 7 consist in a lead screw mechanism 40 of conventional embodiment (illustrated schematically in phantom line), and a handwheel 40a mounted to the exterior of the hood 8 giving simple and sure operation; such a mechanism will be connected in turn to respective indication means, which in a simple embodiment can take the form of a graduated scale preferably in conjunction with a display 26 showing the value of the tool reference diameter D.

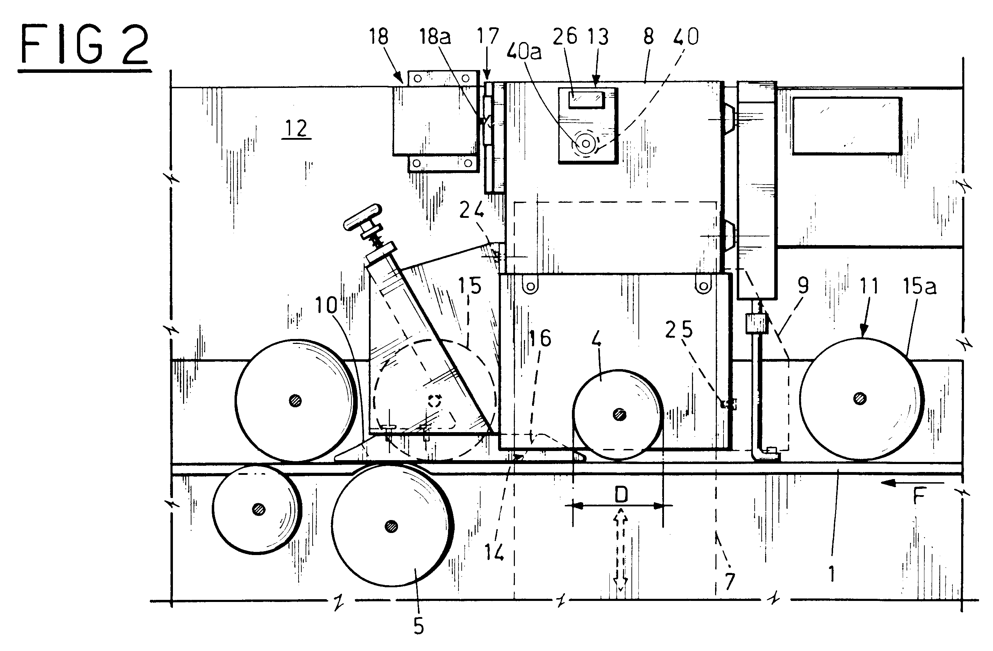

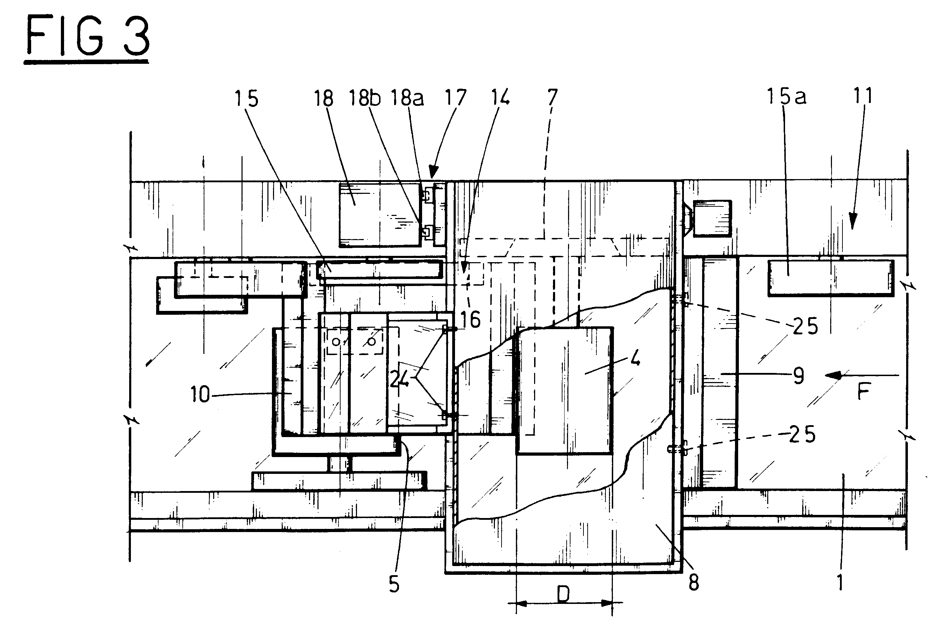

The second hold-down guide 10, i.e. that positioned following the top horizontal tool 4 along the feed path F, is embodied with a housing 14 (see figs 2 and 3 in particular) in which to accommodate one of the feed wheels 15 supported by the rail 12.

More exactly, the second hold-down guide 10 affords a housing 14 shaped distinctly as an outward facing recess 16 sunk into the face directed toward the back rail 12, the wheel 15 being keyed to the rail and accommodated partly within the recess 16.

17 denotes profiled means associated with the side of the hood 8, which are designed to engage the switches 18a and 18b of a control device 18 mounted to the back rail 12 on adjustment of the distance separating the hood 8 from the horizontal bed 1.

Such means 17 consist in conventional cam elements which allow the wheel 15 to adapt to the position assumed by the second hold-down guide 10 within a prescribed range of movement. With this expedient moreover, the height of the hood 8 can be adjusted without occasioning any interference between the second hold-down guide 10 (rigidly associated with the hood) and the feed wheel 15.

With the improved architecture described it becomes possible to reduce the distance between centres of the feed wheel 15a preceding the two horizontal tools (see fig 2) and the next wheel 15 encountered thereafter, in comparison to conventional through feed moulders. Accordingly, there is no longer any need, even when machining stock of more limited longitudinal dimensions, to rely on the jogging action of successive workpieces in ensuring passage of the work beyond the horizontal tools.

## Claims

1. An improvement in through feed moulding machines for woodworking of the type comprising an assembly of spindle heads positioned in close proximity to a horizontal bed (1) and designed to machine four faces of a workpiece (6) with a plurality of tools (2, 3, 4, 5) each mounted to a respective slide (7) by means of which the position of the cutting edge can be vertically adjusted through a direction normal to the work face, wherein each tool (2, 3, 4, 5) is housed internally of a respective hood (8) preceded and succeeded by first and second hold-down guides (9, 10) serving respectively to direct and steady the work (6) through the cutting stroke, and the work is fed from one tool to the next by a plurality of feeding roller means (11) occupying the entire length of the horizontal bed (1) and supported to a rail (12) flanking the bed at rear and vertically movable with respect to said horizontal bed (1); characterized
- in that the hold-down guides (9, 10) relative to at least one horizontal tool (4, 5) are rigidly connected to the sides of the respective hood (8), this one being vertically slidable with respect to the relative supporting slide (7);
- in that means (13) are incorporated between the hood (8) and the tool slide (7), for moving said hood relative to said slide (7) and adjusting the clearance between the hood and the workpiece commensurately with a reference diameter (D) assigned to the tool; and
- in that the second hold-down guide (10) affords a housing (14), one of said plurality of roller means (11) mounted to the rail (12) being received at least in part in said housing (14).

2. An improvement as in claim 1, comprising roller means (11) that consist in a plurality of feed wheels (15), each rotatable about an axis disposed transversely in relation to the longitudinal axis of the horizontal bed (1), wherein the housing (14) afforded by the second hold-down guide (10) appears as a frontally exposed recess (16) directed toward and positioned to coincide with the part of the rail (12) to which the accommodated wheel (15) is keyed.

3. An improvement as in claim 1, further comprising cam means (17), associated with the side of the hood (8) and interacting with a control device (18) associated with the back supporting rail (12), by which the roller means (11) are rendered capable of movement in order to follow the movement of the second hold-down guide (10) within a prescribed range of positional values.

4. An improvement as in claim 1, wherein the second hold-down guide (10) affording the housing (14) is associated rigidly with the horizontal tool (4) positioned to machine the top horizontal face of the work (6).

## Patentansprüche

1. Verbesserung an Kehlmaschinen für die Holzbearbeitung vom Typ enthaltend eine Gruppe von Spindelköpfen, angeordnet dicht an einem horizontalen Bett (1) und dazu bestimmt, vier Flächen eines Werkstuckes (6) mit einer Anzahl von Werkzeugen (2, 3, 4, 5) zu bearbeiten, von denen jedes an einem jeweiligen Schlitten (7) montiert ist, durch welchen die Position der Schneidkante vertikal eingestellt werden kann, und zwar in einer Richtung normal zu der Bearbeitungsfläche, wobei jedes Werkzeug (2, 3, 4, 5) im Inneren einer entsprechenden Haube (8) angeordnet ist, vor und hinter der sich erste und zweite Halteführungen (9, 10) befinden, die jeweils dazu dienen, das Werkstück (6) entlang der Bearbeitungsstrecke zu leiten und zu stabilisieren, und das Werkstuck wird dabei von dem einen Werkzeug zum nächsten durch eine Anzahl von Zuführrollenmitteln (11) zugeführt, welche über die gesamte Länge des horizontalen Bettes (1) reichen und von einer Schiene (12) getragen werden, welche hinten an dem Bett angeordnet und im Verhältnis zu dem horizontalen Bett (1) senkrecht beweglich ist, **dadurch gekennzeichnet**,
- dass die Halteführungen (9, 10), die sich auf wenigstens ein horizontales Werkzeug (4, 5) beziehen, starr an die Seiten der jeweiligen Haube (8) angeschlossen sind und diese im Verhältnis zu dem entsprechenden Trägerschlitten (7) vertikal verstellbar ist;
- dass zwischen der Haube (8) und dem Werkzeugschlitten (7) Mittel (13) enthalten sind, um die genannte Haube im Verhältnis zu dem genannten Schlitten (7) zu bewegen und den Abstand zwischen der Haube und dem Werkstück einzustellen, und zwar entsprechend zu einem Bezugsdurchmesser (D), welcher dem Werkzeug zugeordnet ist; und
- dass die zweite Halteführung (10) einen Sitz (14) aufweist, wobei eins der genannten Anzahl von Rollenmitteln (11), die an der Schiene (12) montiert sind, wenigstens zu einem Teil in dem genannten Sitz (14) aufgenommen wird.

2. Verbesserung nach Patentanspruch 1, enthaltend Rollenmittel (11), die aus einer Anzahl von Zuführrädern (15) bestehen, von denen jedes um eine quer im Verhältnis zu der Längsachse des horizontalen Bettes (1) angeordnete Achse drehbar ist, **dadurch gekennzeichnet**, dass der von der zweiten Halteführung (10) aufgewiesene Sitz (14) als eine frontal nach aussen gerichtete Ausbuchtung (16) erscheint, die der Schiene (12) zugewandt und so angeordnet ist, dass sie mit dein Teil der Schiene übereinstimmt, an welchem das aufgenommene Rad (15) aufgekeilt ist.

3. Verbesserung nach Patentanspruch 1, enthaltend weiterhin Nockenmittel (17), die der Seite der Haube (8) zugeordnet sind und mit einer Steuervorrichtung (18) zusammenwirken, die sich an der rückwärtigen Trägerschiene (12) befindet, und durch welche die Rollenmittel (11) in die Lage versetzt werden, der Bewegung der zweiten Halteführung (10) innerhalb eines bestimmten Bereiches von Positionswerten zu folgen.

4. Verbesserung nach Patentanspruch 1, **dadurch gekennzeichnet**, dass die zweite, den Sitz (14) aufweisende Halteführung (10) fest mit dem horizontalen Werkzeug (4) verbunden ist, angeordnet zur Bearbeitung der oberen horizontalen Fläche des Werkstückes (6).

## Revendications

1. Perfectionnement aux moulurières alimentées en continu pour le travail du bois, du type comprenant une unité de travail comportant des têtes porte-toupies positionnées à proximité immédiate d'un banc horizontal (1) et destinées à usiner les quatre faces d'une pièce en cours de travail (6) au moyen d'une pluralité d'outils (2, 3, 4, 5) chacun monté sur un respectif chariot (7) par lequel on peut régler verticalement la position du tranchant dans une direction normale à la face à travailler, où chaque outil (2, 3, 4, 5) est logé à l'intérieur d'une respective coiffe (8) précédée et suivie de premiers et seconds éléments presseurs de guidage (9, 10) servant respectivement à diriger et rendre stable la pièce (6) pendant sa course de coupe, et la pièce de bois est avancée depuis un outil jusqu'au suivant par une pluralité de moyens d'alimentation à rouleaux (11) occupant toute la longueur du banc horizontal (1) et supportés par une traverse (12) accolée a la partie arrière du banc et mobile verticalement par rapport audit banc horizontal (1);
caractérisé:
- en ce que les éléments presseurs de guidage (9, 10) relatifs à au moins un outil horizontal (4, 5) sont reliés rigidement aux côtés de la respective coiffe (8), celle-ci étant susceptible de coulissement vertical par rapport au respectif chariot de support (8);
- en ce que des moyens (13) sont incorporés entre la coiffe (8) et le chariot porte-outil (7) pour déplacer ladite coiffe par rapport audit chariot (7) et régler la distance entre la coiffe et la pièce en cours de travail en fonction d'un diamètre de référence (D) assigné à l'outil; et
- en ce que le second élément presseur de guidage (10) présente un logement (14) dans lequel est reçu au moins partiellement un moyen (11) faisant partie de de ladite pluralité de moyens à rouleaux (11) montés sur la traverse (12).

2. Perfectionnement selon la revendication 1, comprenant des moyens à rouleaux (11) comportant une pluralité de roues d'entraînement (15), chacune tournant autour d'un axe disposé transversalement par rapport à l'axe longitudinal du banc horizontal (1), caractérisé en ce que le logement (14) présenté par le second élément presseur de guidage (10) se présente sous forme d'une cavité (16) exposée de face, dirigée vers et positionnée de manière a coïncider avec la partie de la traverse (12) où est emboîtée ladite roue (15) logée dans la cavité (16).

3. Perfectionnement selon la revendication 1, comprenant en outre des moyens à cames (17) associés latéralement à la coiffe (8) et interagissant avec un dispositif de commande (18) associé a la traverse arrière (12), par lesquels les moyens à rouleaux (11) deviennent susceptibles de mouvement pour suivre le positionnement du second élément presseur de guidage (10) dans les limites des mouvements que ce dernier peut effectuer.

4. Perfectionnement selon la revendication 1, caractérisé en ce que le second élément presseur de guidage (10) présentant le logement (14) est associé rigidement à l'outil horizontal (4) destiné à effectuer l'usinage de la face horizontale supérieure de la pièce (6).
